# EUROPÄISCHE PATENTSCHRIFT

(11) **EP 3 069 858 B1**
(45) Veröffentlichungstag und Bekanntmachung des Hinweises auf die Patenterteilung: **26.06.2019**
(21) Anmeldenummer: 15159245.8
(22) Anmeldetag: 16.03.2015
(51) Int. Cl.: B29C 70/44, B29C 70/86, B29C 33/12

(54) **Verfahren und Vorrichtung zur Herstellung eines Windenergieanlagenbauteils aus einem Faserverbundwerkstoff**
METHOD AND DEVICE FOR PRODUCING A WIND ENERGY FACILITY COMPONENT FROM A FIBRE COMPOSITE MATERIAL
PROCÉDÉ ET DISPOSITIF DE FABRICATION D'UN COMPOSANT D'ÉOLIENNE EN MATÉRIAU EN FIBRES COMPOSITES

(43) Veröffentlichungstag der Anmeldung: 21.09.2016
(73) Patentinhaber: Nordex Energy GmbH, 22419 Hamburg (DE)
(72) Erfinder: Schaale, Thomas, 18055 Rostock (DE)
(74) Vertreter: Hauck Patentanwaltspartnerschaft mbB

(56) Entgegenhaltungen:
- WO-A1-2006/070171

## Beschreibung

Die Erfindung betrifft ein Verfahren zur Herstellung eines Windenergieanlagenbauteils aus einem Faserverbundwerkstoff, bei dem ein vorgefertigtes Bauelement und Verstärkungsfasern in einer Herstellungsform angeordnet und mit einem flüssigen Kunststoffmaterial umgeben werden. Beim Aushärten des flüssigen Kunststoffmaterials werden das vorgefertigte Bauelement und die Verstärkungsfasern miteinander verbunden. Die Erfindung betrifft außerdem eine Vorrichtung, mit deren Hilfe Windenergieanlagenbauteile in der genannten Weise hergestellt werden können.

Derartige Verfahren werden insbesondere für große und komplexe Windenergieanlagenbauteile wie Rotorblätter, Gondelgehäuse oder -verkleidungen oder sonstige Windenergieanlagenbauteile eingesetzt, bei denen die Integration eines vorgefertigten Bauelements zu den gewünschten Eigenschaften des Windenergieanlagenbauteils führt.

Um das flüssige Kunststoffmaterial in die Herstellungsform einzubringen und/oder um die in der Form befindlichen Materialien zu kompaktieren, wird die Herstellungsform in der Regel luftdicht verschlossen und evakuiert. Hierzu kann sie zum Beispiel mit einer Vakuumfolie, die gegenüber den Rändern der Herstellungsform abgedichtet wird, verschlossen werden. Gleichzeitig muss die korrekte Positionierung des vorgefertigten Bauelements in der Herstellungsform sichergestellt werden. Hierzu kann das vorgefertigte Bauelement mit einer aufwendigen Haltekonstruktion verbunden werden, die außerhalb der Herstellungsform befestigt wird. Die Abdeckung der Herstellungsform, beispielsweise mit einer Vakuumfolie, wird dadurch erheblich erschwert, da entweder die gesamte Haltekonstruktion mit abgedeckt werden oder durch die Vakuumfolie hindurchgeführt werden muss, was eine zusätzliche Abdichtung im Bereich der Durchführung notwendig macht.

Aus der Druckschrift EP 2 662 204 A1 ist ein Verfahren bekannt geworden, das ohne eine solche, teilweise außerhalb der Herstellungsform angeordnete Haltekonstruktion auskommt. Bei der in der Druckschrift vorgeschlagenen Lösung weist das vorgefertigte Bauelement einen Positionierungsvorsprung auf, der formschlüssig in eine komplementär geformte Aufnahme in der Herstellungsform eingesetzt wird. Dadurch wird die relative Anordnung des vorgefertigten Bauelements zu der Herstellungsform vorgegeben.

Aus der Druckschrift WO 2006/070171 A1 ist ein Verfahren zur Herstellung eines Windenergieanlagenrotorblatts bekannt geworden, bei dem Befestigungselemente des Rotorblatts mit Bolzen an einer Führungsplatte befestigt werden, die an einer Herstellungsform befestigt und gegenüber dieser abgedichtet wird. Versteht man die Führungsplatte als Teil der Herstellungsform und den Bolzen als Positionierstift, entspricht das bekannte Verfahren den Merkmalen des Oberbegriffs des Anspruchs 1 und die bekannte Herstellungsform weist die Merkmale des Oberbegriffs des Anspruchs 10 auf.

Davon ausgehend ist es die Aufgabe der Erfindung, ein Verfahren zur Herstellung eines Windenergieanlagenbauteils aus einem Faserverbundwerkstoff zur Verfügung zu stellen, bei dem eine exakte Positionierung eines vorgefertigten Bauelements möglich ist und das noch einfacher und universeller einsetzbar ist, sowie eine hierfür geeignete Vorrichtung.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Herstellung eines Windenergieanlagenbauteils aus einem Faserverbundwerkstoff und weist die folgenden Schritte auf:
- Bereitstellen einer Herstellungsform,
- Anordnen eines vorgefertigten Bauelements in der Herstellungsform, wobei das vorgefertigte Bauelement eine vorgegebene Geometrie aufweist und in einer vorgegebenen Lage relativ zu der Herstellungsform angeordnet wird,
- Anordnen von Verstärkungsfasern in der Herstellungsform,
- Anordnen eines flüssigen Kunststoffmaterials in der Herstellungsform,
- Aushärten des flüssigen Kunststoffmaterials, wobei das vorgefertigte Bauelement und die Verstärkungsfasern miteinander verbunden werden,
- Entformen des Windenergieanlagenbauteils,
- Bereitstellen eines Positionierstifts,
- Einsetzen eines ersten Abschnitts des Positionierstifts in eine Aufnahme der Herstellungsform,
- Einsetzen eines zweiten Abschnitts des Positionierstifts in eine Aufnahme des vorgefertigten Bauelements.

Es versteht sich, dass die genannten Schritte nicht in der angegebenen Reihenfolge ausgeführt werden müssen.

Das vorgefertigte Bauelement weist eine vorgegebene Geometrie auf. Besteht das vorgefertigte Bauelement aus einem Faserverbundwerkstoff, ist es beim Anordnen in der Herstellungsform bereits ausgehärtet. Dies kann beispielsweise der Fall sein bei einem vorgefertigten Strukturbauteil, beispielsweise einem Gurt oder Steg für ein Windenergieanlagenrotorblatt, das beispielsweise Kohlenstofffasern aufweist. Das vorgefertigte Bauelement kann jedoch auch aus einem anderen Material bestehen, beispielsweise aus Schaum, Holz oder Metall oder aus einer Kombination derartiger Materialien. Stets weist das vorgefertigte Bauelement beim Anordnen in der Herstellungsform bereits eine vorgegebene Geometrie auf.

Die Verstärkungsfasern können insbesondere Glasfasern oder Kohlenstofffasern oder sonstige Fasern aus einem künstlichen oder natürlichen Material sein. Sie können beispielsweise in Form von Gelegen oder Geweben, bei denen die einzelnen Fasern eine vorgegebene Orientierung aufweisen, oder in ungeordneter Form verwendet werden.

Das flüssige Kunststoffmaterial kann beispielsweise ein Polyester- oder Epoxidharz sein, das aufgrund einer chemischen Reaktion aushärtet, gegebenenfalls unter Einfluss von Licht, Druck oder Wärme. Alternativ kann das flüssige Kunststoffmaterial ein Thermoplast sein. Vor dem Aushärten des flüssigen Kunststoffmaterials sind die Verstärkungsfasern und das vorgefertigte Bauelement in das flüssige Kunststoffmaterial eingebettet. Dabei können die Verstärkungsfasern insbesondere allseitig von dem flüssigen Kunststoffmaterial umgeben sein. Das vorgefertigte Bauelement kann ebenfalls allseitig von dem flüssigen Kunststoffmaterial umgeben sein, oder auch nur entlang eines Teils seiner Oberfläche. Ebenfalls möglich ist, dass das vorgefertigte Bauelement Öffnungen oder Oberflächenstrukturen aufweist, die ganz oder teilweise von dem flüssigen Kunststoffmaterial durchdrungen oder benetzt werden. Nach dem Aushärten des flüssigen Kunststoffmaterials sind das vorgefertigte Bauelement und die Verstärkungsfasern fest miteinander verbunden und bilden das Windenergieanlagenbauteil, gegebenenfalls in Kombination mit weiteren Bauelementen.

Das flüssige Kunststoffmaterial kann getrennt von den Verstärkungsfasern in die Form eingebracht werden, beispielsweise in einem Vakuuminfusionsverfahren. Ebenfalls möglich ist eine Verwendung von mit dem flüssigen Kunststoffmaterial vorimprägnierten Verstärkungsfasermaterialien, sogenannten Prepregs.

Bei der Erfindung werden ein erster Abschnitt des Positionierstifts in eine Aufnahme der Herstellungsform und ein zweiter Abschnitt des Positionierstifts in eine Aufnahme des vorgefertigten Bauelements eingesetzt. Die Reihenfolge dieser Schritte ist beliebig. Die genannten Abschnitte des Positionierstifts können in der jeweiligen Aufnahme fest angeordnet oder lediglich lose eingesetzt werden. Nach dem Einsetzen des ersten Abschnitts des Positionierstifts in die Aufnahme der Herstellungsform befindet sich der Positionierstift in einer definierten Anordnung relativ zu der Herstellungsform und nach dem Einsetzen des zweiten Abschnitts des Positionierstifts in die Aufnahme des vorgefertigten Bauelements befindet sich der Positionierstift in einer definierten Anordnung relativ zu dem vorgefertigten Bauelement. Damit wird auch die relative Anordnung des vorgefertigten Bauelements zu der Herstellungsform durch den Positionierstift und die beiden Aufnahmen derart vorgegeben, dass sie exakt der gewünschten Lage entspricht. Insbesondere kann das vorgefertigte Bauelement durch den Positionierstift in dieser Lage hinreichend fixiert werden, um die korrekte Anordnung des vorgefertigten Bauelements während des Aushärtens des flüssigen Kunststoffmaterials zu bewirken.

Die Erfindung beruht auf der Erkenntnis, dass das aus der eingangs genannten Druckschrift EP 2 662 204 A1 bekannte Verfahren zwar in vielen Fällen besonders einfach ausgeführt werden kann, jedoch Beschränkungen hinsichtlich der Gestaltung des vorgefertigten Bauelements und hinsichtlich der relativen Anordnung des vorgefertigten Bauelements zur Herstellungsform mit sich bringt. Der bei der Erfindung verwendete Positionierstift ist hingegen universell einsetzbar. Insbesondere können vorgefertigte Bauelemente aus den unterschiedlichsten Materialien mit einer Aufnahme für den zweiten Abschnitt des Positionierstifts versehen werden.

Auch hinsichtlich der Anordnung des vorgefertigten Bauelements relativ zu der Herstellungsform bietet die Verwendung eines Positionierstifts eine größere Flexibilität. Insbesondere ist es unter Verwendung eines Positionierstifts möglich - im Gegensatz zu der aus dem Stand der Technik bekannten, formschlüssigen Verankerung eines Positionierungsvorsprungs, der fest an dem vorgefertigten Bauelement angeordnet ist - den Positionierstift in einer beliebigen Richtung anzuordnen. Insbesondere kann die Richtung des Positionierstifts von einer Bewegungsrichtung des vorgefertigten Bauelements relativ zu der Herstellungsform beim Anordnen des vorgefertigten Bauelements in der Herstellungsform verschieden sein.

Auch eine Verwendung mehrerer Positionierstifte ist möglich, wodurch eine noch genauere Positionierung und/oder noch bessere Fixierung des vorgefertigten Bauelements in der Herstellungsform erreicht wird. Bei der Verwendung mehrerer Positionierstifte für ein einziges, vorgefertigtes Bauelement können die Positionierstifte in derselben Richtung oder in unterschiedlichen Richtungen ausgerichtet sein.

Ein weiterer Vorteil der Erfindung ist, dass die Positionierstifte unabhängig von dem vorgefertigten Bauelement und mit geringem Aufwand hergestellt werden können.

In einer Ausgestaltung wird das vorgefertigte Bauelement in einem Abstand von der Herstellungsform angeordnet, der von dem Positionierstift überbrückt wird. Dadurch wird das vorgefertigte Bauelement durch den Positionierstift in einem gewünschten Abstand von der Herstellungsform gehalten. Die beiden Abschnitte des Positionierstifts können hierzu in den entsprechenden Aufnahmen befestigt werden. Ebenfalls möglich ist die Verwendung von Anschlägen, die ein tieferes Hineinrutschen in die jeweiligen Aufnahmen verhindern. Auf diese Weise kann das vorgefertigte Bauelement in einem Abstand von einer äußeren Kontur des Windenergieanlagenbauteils, die von der Innenseite der Herstellungsform vorgegeben wird, angeordnet werden.

In einer Ausgestaltung wird ein Teil der Verstärkungsfasern zwischen der Herstellungsform und dem vorgefertigten Bauelement um den Positionierstift herumgeführt, ohne die Verstärkungsfasern im Bereich des Positionierstifts zu durchtrennen. Hierzu kann beispielsweise zunächst der erste Abschnitt des Positionierstifts in die Aufnahme der Herstellungsform eingesetzt werden, sodass die Verstärkungsfasern anschließend um den Positionierstift herum in die Herstellungsform eingelegt werden können. Alternativ ist es auch möglich, die Verstärkungsfasern, beispielsweise in Form eines Geleges oder Gewebes, vor dem Einsetzen des ersten Abschnitts des Positionierstifts in die Herstellungsform einzulegen und den Positionierstift anschließend zwischen einzelnen Verstärkungsfasern oder Verstärkungsfasersträngen hindurch in die Aufnahme in der Herstellungsform einzusetzen. In beiden Fällen wird ein Durchtrennen der Verstärkungsfasern im Bereich des Positionierstifts vermieden, sodass die Festigkeit des Windenergieanlagenbauteils nicht nennenswert beeinträchtigt wird.

In einer Ausgestaltung wird der erste Abschnitt des Positionierstifts in ein Innengewinde der Aufnahme der Herstellungsform eingeschraubt und/oder der zweite Abschnitt des Positionierstifts wird in ein Innengewinde der Aufnahme des vorgefertigten Bauelements eingeschraubt. Dadurch wird der jeweilige Abschnitt des Positionierstifts in der betreffenden Aufnahme befestigt, sodass er nicht ohne weiteres herausrutschen kann. Durch mehr oder weniger tiefes Einschrauben eines der Abschnitte des Positionierstifts in die betreffende Aufnahme kann zudem der Abstand zwischen dem vorgefertigten Bauelement und der Herstellungsform justiert werden.

In einer Ausgestaltung ist die Aufnahme in dem vorgefertigten Bauelement von einer mit dem vorgefertigten Bauelement verbundenen Hülse gebildet. Grundsätzlich kann die Aufnahme in dem vorgefertigten Bauelement aus dem Material des Bauelements selbst bestehen. Beispielsweise kann bei einem im Wesentlichen aus einem Holzwerkstoff bestehenden, vorgefertigten Bauelement zum Beispiel eine Bohrung eingebracht werden, die die Aufnahme bildet. Demgegenüber kann die Verwendung einer mit dem vorgefertigten Bauelement verbundenen Hülse sinnvoll sein, um insbesondere bei relativ nachgiebigen Materialien eine ausreichend belastbare Aufnahme zu schaffen, beispielsweise wenn es sich bei dem vorgefertigten Bauelement um einen Kern aus einem Schaummaterial handelt. Außerdem kann eine separat gefertigte Hülse unter Umständen einfacher mit der gewünschten Geometrie der Aufnahme versehen werden, als ein komplexes, vorgefertigtes Bauelement. Auch die Einbringung eines Gewindes ist bei Verwendung einer Hülse besonders einfach möglich.

In einer Ausgestaltung weist die Aufnahme in dem vorgefertigten Bauelement eine Durchgangsöffnung auf. Die Durchgangsöffnung kann zylindrisch sein, insbesondere kreiszylindrisch. Ist die Aufnahme im vorgefertigten Bauelement von einer Hülse gebildet, kann die Hülse die Durchgangsöffnung aufweisen. Die Öffnung erstreckt sich somit von derjenigen Seite des vorgefertigten Bauelements, an der die Aufnahme angeordnet und in die der zweite Abschnitt des Positionierstifts eingesetzt wird, bis zu einer gegenüberliegenden Seite des vorgefertigten Bauelements. Die Verwendung einer solchen Durchgangsöffnung ermöglicht einerseits, den Positionierstift von der der Aufnahme abgewandten Seite des vorgefertigten Bauelements aus einzusetzen und/oder ihn von dort aus wieder aus dem Windenergieanlagenbauteil zu entnehmen. Andererseits werden beim Evakuieren der Herstellungsform Lufteinschlüsse im Bereich der Aufnahme in dem vorgefertigten Bauelement vermieden.

Bei der Erfindung wird beim Entformen des Windenergieanlagenbauteils der erste Abschnitt des Positionierstifts von dem zweiten Abschnitt des Positionierstifts getrennt. Zu diesem Zweck weist der Positionierstift zwischen dem ersten Abschnitt und dem zweiten Abschnitt eine Sollbruchstelle auf. Nach dem Entformen des Windenergieanlagenbauteils kann der erste Abschnitt des Positionierstifts aus der Herstellungsform und der zweite Abschnitt des Positionierstifts aus dem vorgefertigten Bauelement bzw. dem fertiggestellten Windenergieanlagenbauteil entfernt werden.

In einer Ausgestaltung ist das Windenergieanlagenbauteil ein Windenergieanlagenrotorblatt oder ein Teil davon oder ein Gehäuse einer Gondel einer Windenergieanlage oder ein Teil davon. Die genannten Windenergieanlagenbauteile profitieren wegen ihrer Komplexität und Größe besonders von dem erfindungsgemäßen Verfahren.

In einer Ausgestaltung ist das vorgefertigte Bauelement ein Befestigungsanker zur Befestigung eines Anbauteils, ein Träger, eine Süllkante oder ein Kern für ein in Sandwichbauweise hergestelltes Windenergieanlagenbauteil. Eine Süllkante stellt einen exakten Abschluss des Windenergieanlagenbauteils zur Verbindung mit einem weiteren Windenergieanlagenbauteil dar, beispielsweise an einer Windenergieanlagenrotorblatthalbschale zur Verbindung mit einer weiteren Windenergieanlagenrotorblatthalbschale. In allen Fällen gelingt mit dem erfindungsgemäßen Verfahren eine exakte Positionierung des vorgefertigten Bauelements.

Die oben genannte Aufgabe wird ebenfalls gelöst durch die Vorrichtung mit den Merkmalen des Anspruchs 9. Vorteilhafte Ausgestaltungen sind in den sich anschließenden Unteransprüchen angegeben.

Die Vorrichtung dient zur Herstellung eines Windenergieanlagenbauteils aus einem Faserverbundwerkstoff, wobei die Vorrichtung eine Herstellungsform mit einer Innenseite aufweist, die dem herzustellenden Windenergieanlagenbauteil zugewandt ist. Die Vorrichtung zeichnet sich aus durch:
- einen Positionierstift, der einen ersten Abschnitt und einen zweiten Abschnitt aufweist, und dadurch, dass
- die Herstellungsform eine Aufnahme aufweist, in die der erste Abschnitt des Positionierstifts einsetzbar ist, sodass der zweite Abschnitt aus der Innenseite der Herstellungsform hervorsteht und zur Anordnung eines vorgefertigten Bauelements, das eine vorgegebene Geometrie aufweist, in der Herstellungsform verwendbar ist.

Die Vorrichtung eignet sich insbesondere zur Ausführung eines Verfahrens mit den vorstehend erläuterten Merkmalen. Zur Erläuterung der Merkmale der Vorrichtung und zu deren Vorteilen wird auf die vorstehenden Erläuterungen der korrespondierenden Verfahrensmerkmale verwiesen. Es versteht sich, dass alle Merkmale der Vorrichtung mit dem erfindungsgemäßen Verfahren kombiniert werden können und umgekehrt.

In einer Ausgestaltung weist der erste Abschnitt des Positionierstifts ein Außengewinde und die Aufnahme der Herstellungsform ein Innengewinde auf, sodass der erste Abschnitt des Positionierstifts in das Innengewinde der Aufnahme der Herstellungsform einschraubbar ist. Auch hierzu wird auf die vorstehenden Erläuterungen der korrespondierenden Verfahrensschritte verwiesen.

In einer Ausgestaltung ist die Aufnahme in der Herstellungsform von einer in die Herstellungsform integrierten Hülse gebildet. Dies ermöglicht einerseits, wie vorstehend am Beispiel einer die Aufnahme in dem vorgefertigten Bauelement bildenden Hülse bereits erläutert, eine exakte Positionierung des Positionierstifts und gegebenenfalls eine Befestigung des Positionierstifts in der Aufnahme der Herstellungsform. Weiterhin vereinfacht sich unter Umständen die Fertigung der Herstellungsform. Ein weiterer Vorteil ist, dass die Aufnahme in der Herstellungsform bei Einsatz einer speziellen Hülse eine ausreichende Belastbarkeit für eine wiederholte Verwendung aufweist. Insbesondere kann die Hülse so ausgelegt sein, dass mehrere hundert Windenergieanlagenbauteile in der Herstellungsform gefertigt werden können.

In einer Ausgestaltung weist die Aufnahme in der Herstellungsform eine zylindrische Öffnung auf, die an einem von der Innenseite der Herstellungsform abgewandten Ende geschlossen ist. Insbesondere kann es sich bei der Aufnahme um eine Sackbohrung handeln. Diese kann unmittelbar in die Herstellungsform eingearbeitet sein, oder in die genannte, die Aufnahme der Herstellungsform bildende Hülse. Der besondere Vorteil des geschlossenen Endes ist, dass ein gesondertes Abdichten der Aufnahme für eine Evakuierung der Herstellungsform nicht erforderlich ist.

Die Erfindung wird nachfolgend anhand von Figuren näher erläutert. Es zeigen:
- Fig. 1-8: schematische Querschnittsdarstellungen zur Veranschaulichung einzelner Schritte des erfindungsgemäßen Verfahrens,
- Fig. 9-15: schematische Querschnittsdarstellungen zur Veranschaulichung eines Verfahrens zur Fertigung einer erfindungsgemäßen Herstellungsform,
- Fig. 16: eine schematische Querschnittsdarstellung eines alternativen Verfahrens zur Fertigung der Herstellungsform.

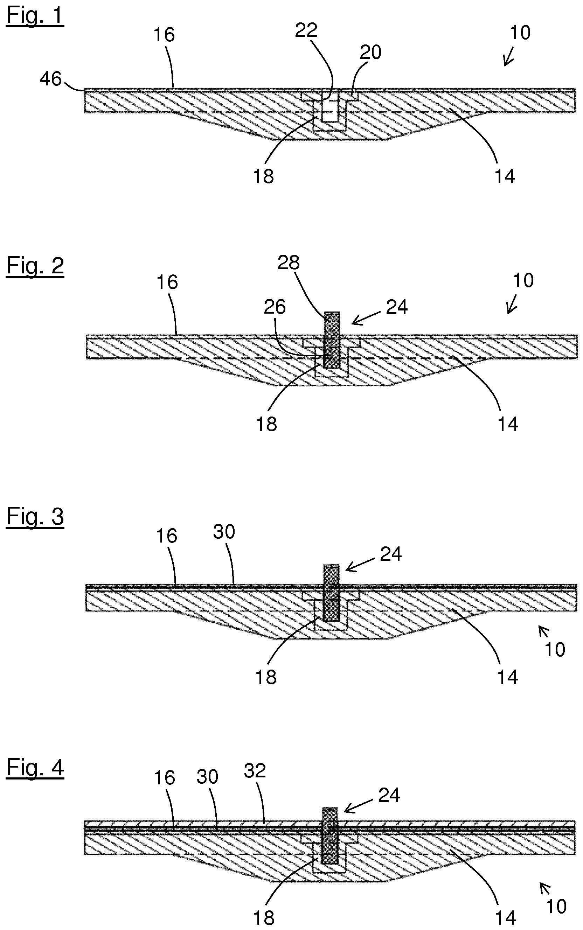

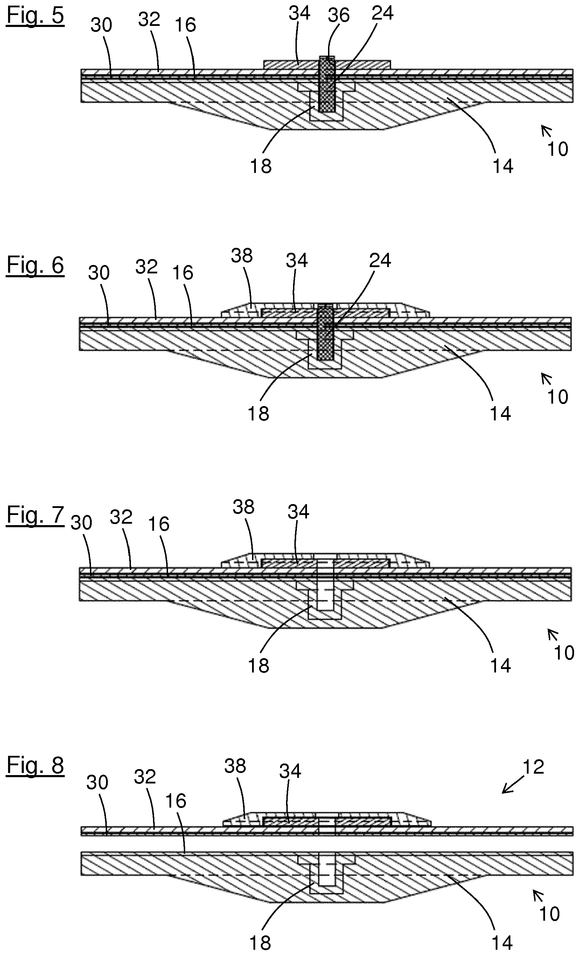

Figur 1 zeigt einen Teil einer Herstellungsform 10 zur Herstellung eines Windenergieanlagenbauteils 12 (siehe z.B. Figur 8) im Querschnitt. Die Herstellungsform 10 besteht im Wesentlichen aus einem Faserverbundwerkstoff 14 und weist eine Innenseite 16 auf.

In den Faserverbundwerkstoff 14 ist eine Hülse 18 aus Metall eingesetzt, die einen flanschartig geformten Abschnitt 20 aufweist, dessen Stirnseite etwa bündig mit der Innenseite 16 der Herstellungsform 10 abschließt. Die Hülse 18 ist lediglich von einer dünnen Feinharzschicht 46 überdeckt.

In der Hülse 18 ist eine Sackbohrung 22 ausgebildet, die ein nicht dargestelltes Innengewinde aufweist. Die Hülse 18 bildet eine Aufnahme der Herstellungsform 10. In einer Umgebung der Hülse 18 ist der Faserverbundwerkstoff 14 der Herstellungsform 10 mit einer größeren Materialstärke ausgeführt, um eine Verstärkung zur festen Verankerung der Hülse 18 zu bilden.

Figur 2 zeigt die in Figur 1 bereitgestellte Herstellungsform 10 nach dem Einsetzen eines ersten Abschnitts 26 eines Positionierstifts 24 in die von der Hülse 18 gebildete Aufnahme der Herstellungsform 10. Der Positionierstift 24 besteht im Beispiel aus Metall und hat eine längliche, zylindrische Form. Er weist im Bereich des ersten Abschnitts 26 ein nicht dargestelltes Außengewinde auf, das in das Innengewinde der Sackbohrung 22 eingeschraubt ist. Ein zweiter Abschnitt 28 des Positionierstifts steht von der Innenseite 16 der Herstellungsform 10 vor. Er weist ebenfalls ein nicht dargestelltes Außengewinde auf.

Nach dem Einsetzen des ersten Abschnitts 26 des Positionierstiftes 24 in die Aufnahme der Herstellungsform 10 wird zunächst ein Trennmittel auf die Innenseite 16 der Herstellungsform 10 aufgetragen, anschließend eine Gelcoat-Schicht 30, die in der Figur 3 dargestellt ist. Die Gelcoat-Schicht 30 bildet später eine äußere Oberfläche des herzustellenden Windenergieanlagenbauteils 12.

Nach dem Auftragen der Gelcoat-Schicht 30 werden, wie in der Figur 4 dargestellt, Verstärkungsfasern 32 in der Herstellungsform 10 angeordnet. Hierzu können mit einem flüssigen Kunststoffmaterial vorimprägnierte Verstärkungsfasern, sogenannte Prepregs, in die Form eingelegt werden, oder trockene Verstärkungsfasern, insbesondere in Form von Gelegen oder Geweben oder sonstigen Fasermatten. In jedem Fall werden die Verstärkungsfasern 32 um den Positionierstift 24 herumgeführt, sodass sie im Bereich des Positionierstifts 24 nicht durchtrennt werden.

Figur 5 zeigt die Baugruppe aus der Figur 4 nach dem Anordnen eines vorgefertigten Bauelements 34 in der Herstellungsform 10. Das vorgefertigte Bauelement 34 ist ein Stahleinleger, der eine Durchgangsöffnung 36 mit einem nicht dargestellten Innengewinde aufweist. Die Durchgangsöffnung 36 bildet eine Aufnahme des vorgefertigten Bauelements 34 für den zweiten Abschnitt 28 des Positionierstifts 24. Im dargestellten Beispiel ist das vorgefertigte Bauelement 34 mit dieser Aufnahme auf den zweiten Abschnitt 28 des Positionierstifts 24 aufgeschraubt, bis es sich in dem gewünschten Abstand von der Innenseite 16 der Herstellungsform 10 befindet. Zwischen dem vorgefertigten Bauelement 34 und der Innenseite 16 der Herstellungsform 10 ist ein Teil der Verstärkungsfasern 32 angeordnet.

Figur 6 zeigt, dass das vorgefertigte Bauelement 34 nachfolgend mit weiteren Lagen von Verstärkungsfasern 38 bedeckt worden ist, die an den zuvor eingelegten Verstärkungsfasern 32 anliegen, sodass das vorgefertigte Bauelement 34 allseitig von den Verstärkungsfasern 32 bzw. 38 umgeben ist.

Sofern die Verstärkungsfasern 32 und 38 in trockener Form in die Herstellungsform 10 eingebracht worden sind, werden sie nun mit einem flüssigen Kunststoffmaterial durchtränkt. Dies kann beispielsweise nach einem luftdichten Verschließen der Herstellungsform 10 in einem Vakuuminfusionsverfahren erfolgen. Ebenfalls möglich ist ein Auftragen des flüssigen Kunststoffmaterials im Handlaminierverfahren. Die Verstärkungsfasern 32, 38 und das vorgefertigte Bauelement 34 sind anschließend in das flüssige Kunststoffmaterial eingebettet. Die Anordnung des vorgefertigten Bauelements 34 relativ zu der Herstellungsform 10 ist durch den Positionierstift 24 vorgegeben und bleibt beim Aushärten des flüssigen Kunststoffmaterials unverändert.

Nach dem Aushärten des flüssigen Kunststoffmaterials kann der Positionierstift 24 entfernt werden, sodass sich die Anordnung der Figur 7 ergibt. Hierzu kann der Positionierstift 24 im einfachsten Fall aus den Innengewinden in der Aufnahme der Herstellungsform 10 und in der Aufnahme des vorgefertigten Bauelements 34 herausgeschraubt werden.

Figur 8 zeigt das fertiggestellte Windenergieanlagenbauteil 12 nach dem Entformen. Die Herstellungsform 10 kann anschließend zur Fertigung weiterer Windenergieanlagenbauteile 12 verwendet werden.

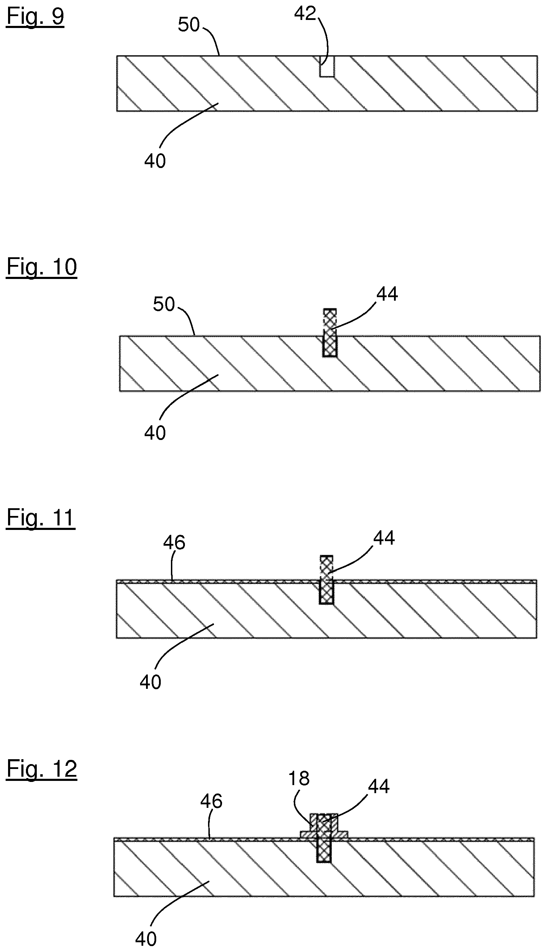

Nachfolgend werden anhand der Figuren 9 bis 16 zwei unterschiedliche Verfahren erläutert, mit denen die Herstellungsform 10 des erfindungsgemäßen Verfahrens hergestellt werden kann. Hierzu wird zunächst, wie in der Figur 9 dargestellt, ein Urmodell 40 erstellt, dessen Formgebung dem herzustellenden Windenergieanlagenbauteil 12 entspricht. Das Urmodell 40 ist eine Positivform. Das Urmodell 40 wird an einer Außenseite 50 mit einer Führungsbohrung 42 versehen, in die, wie in der Figur 10 dargestellt, ein Positionierstift 44 eingesetzt wird, sodass der Positionierstift 44 teilweise aus dem Urmodell 40 hervorsteht.

Anschließend wird die Außenseite 50 des Urmodells 40 mit einem Trennmittel versehen und es wird als erste Schicht der herzustellenden Herstellungsform 10 eine Feinharzschicht 46 aufgebracht. Dies ist in der Figur 11 dargestellt.

Anschließend, wie in der Figur 12 gezeigt, wird eine Hülse 18 auf dem Positionierstift 44 angeordnet, die später eine Aufnahme der Herstellungsform 10 bildet.

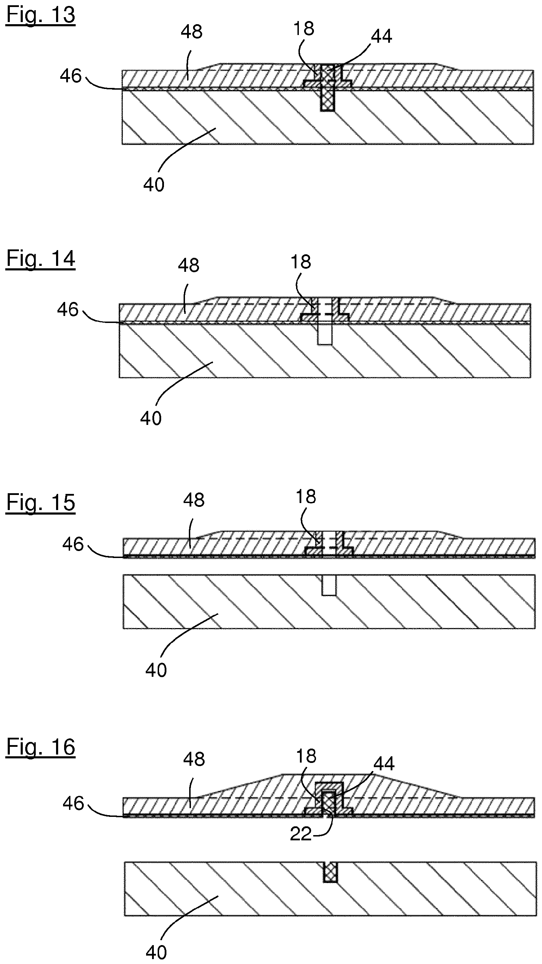

Figur 13 zeigt die weitere Fertigstellung der Herstellungsform 10. Im Beispiel werden hierzu mehrere Schichten von Verstärkungsfasern 48 im Laminierverfahren verarbeitet.

Nach dem Aushärten wird der Positionierstift 44 entfernt, sodass sich die in der Figur 14 dargestellte Anordnung ergibt. Anschließend wird die Herstellungsform 10 von dem Urmodell 40 getrennt, wie in der Figur 15 dargestellt.

Als Alternative zu den in den Figuren 14 und 15 dargestellten Schritten kann, wie in der Figur 16 dargestellt, der Positionierstift 44 beim Trennen der Herstellungsform 10 von dem Urmodell 40 zerstört werden, insbesondere im Bereich einer Sollbruchstelle. Bei dieser Lösung kann die Aufnahme der Herstellungsform 10 insbesondere an ihrer von der Innenseite 16 der Herstellungsform 10 abgewandten Seite geschlossen sein, zum Beispiel, wie in der Figur 16 dargestellt, bei Verwendung einer Hülse 18, in der eine Sackbohrung 22 ausgebildet ist. Nach dem Trennen der Herstellungsform 10 von dem Urmodell 40 wird der in der Aufnahme der Herstellungsform 10 verbliebene Abschnitt des Positionierstifts 44 entfernt.

### Liste der verwendeten Bezugszeichen

- 10: Herstellungsform
- 12: Windenergieanlagenbauteil
- 14: Faserverbundwerkstoff
- 16: Innenseite
- 18: Hülse
- 20: flanschartiger Abschnitt
- 22: Sackbohrung
- 24: Positionierstift
- 26: erster Abschnitt des Positionierstifts
- 28: zweiter Abschnitt des Positionierstifts
- 30: Gelcoat-Schicht
- 32: Verstärkungsfasern
- 34: vorgefertigtes Bauelement
- 36: Durchgangsöffnung
- 38: weitere Verstärkungsfasern
- 40: Urmodell
- 42: Führungsbohrung
- 44: Positionierstift
- 46: Feinharzschicht
- 48: Verstärkungsfasern
- 50: Außenseite

## Patentansprüche

1. Verfahren zur Herstellung eines Windenergieanlagenbauteils (12) aus einem Faserverbundwerkstoff, wobei das Verfahren die folgenden Schritte aufweist:
• Bereitstellen einer Herstellungsform (10),
• Bereitstellen eines Positionierstifts (24),
• Anordnen eines vorgefertigten Bauelements (34) in der Herstellungsform (10), wobei das vorgefertigte Bauelement (34) eine vorgegebene Geometrie aufweist und in einer vorgegebenen Lage relativ zu der Herstellungsform (10) angeordnet wird,
• Einsetzen eines ersten Abschnitts (26) des Positionierstifts (24) in eine Aufnahme der Herstellungsform (10),
• Einsetzen eines zweiten Abschnitts (28) des Positionierstifts (24) in eine Aufnahme des vorgefertigten Bauelements (34),
• Anordnen von Verstärkungsfasern (32, 38) in der Herstellungsform (10),
• Anordnen eines flüssigen Kunststoffmaterials in der Herstellungsform (10),
• Aushärten des flüssigen Kunststoffmaterials, wobei das vorgefertigte Bauelement (34) und die Verstärkungsfasern (32, 38) miteinander verbunden werden,
• Entformen des Windenergieanlagenbauteils (12), **dadurch gekennzeichnet, dass** beim Entformen des Windenergieanlagenbauteils (12) der erste Abschnitt (26) des Positionierstifts (24) von dem zweiten Abschnitt (28) des Positionierstifts (24) getrennt wird.

2. Verfahren nach Anspruch 1, **dadurch gekennzeichnet, dass** das vorgefertigte Bauelement (34) in einem Abstand von der Herstellungsform (10) angeordnet wird, der von dem Positionierstift (24) überbrückt wird.

3. Verfahren nach Anspruch 1 oder 2, **dadurch gekennzeichnet, dass** ein Teil der Verstärkungsfasern (32) zwischen der Herstellungsform (10) und dem vorgefertigten Bauelement (34) um den Positionierstift (24) herumgeführt wird, ohne die Verstärkungsfasern (32) im Bereich des Positionierstifts (24) zu durchtrennen.

4. Verfahren nach einem der Ansprüche 1 bis 3, **dadurch gekennzeichnet, dass** der erste Abschnitt (26) des Positionierstifts (24) in ein Innengewinde der Aufnahme der Herstellungsform (10) eingeschraubt wird und/oder der zweite Abschnitt (28) des Positionierstifts (24) in ein Innengewinde der Aufnahme des vorgefertigten Bauelements (34) eingeschraubt wird.

5. Verfahren nach einem der Ansprüche 1 bis 4 **dadurch gekennzeichnet, dass** die Aufnahme in dem vorgefertigten Bauelement (34) von einer mit dem vorgefertigten Bauelement (34) verbundenen Hülse (18) gebildet ist.

6. Verfahren nach einem der Ansprüche 1 bis 5, **dadurch gekennzeichnet, dass** die Aufnahme in dem vorgefertigten Bauelement (34) eine Durchgangsöffnung (36) aufweist.

7. Verfahren nach einem der Ansprüche 1 bis 6, **dadurch gekennzeichnet, dass** das Windenergieanlagenbauteil (12) ein Windenergieanlagenrotorblatt oder ein Teil davon oder ein Gehäuse einer Gondel einer Windenergieanlage oder ein Teil davon ist.

8. Verfahren nach einem der Ansprüche 1 bis 7, **dadurch gekennzeichnet, dass** das vorgefertigte Bauelement (34) ein Befestigungsanker zur Befestigung eines Anbauteils, ein Träger, eine Süllkante oder ein Kern für ein in Sandwichbauweise hergestelltes Windenergieanlagenbauteil (12) ist.

9. Vorrichtung zur Herstellung eines Windenergieanlagenbauteils (12) aus einem Faserverbundwerkstoff, wobei die Vorrichtung folgendes aufweist:
• eine Herstellungsform (10) mit einer Innenseite (16), die dem herzustellenden Windenergieanlagenbauteil (12) zugewandt ist, und
• einen Positionierstift (24), der einen ersten Abschnitt (26) und einen zweiten Abschnitt (28) aufweist, wobei
• die Herstellungsform (10) eine Aufnahme aufweist, in die der erste Abschnitt (26) des Positionierstifts (24) einsetzbar ist, so dass der zweite Abschnitt (28) aus der Innenseite (16) der Herstellungsform (10) hervorsteht und zur Anordnung eines vorgefertigten Bauelements (34), das eine vorgegebene Geometrie aufweist, in der Herstellungsform (10) verwendbar ist, **dadurch gekennzeichnet, dass**
• der Positionierstift (24) zwischen dem ersten Abschnitt (26) und dem zweiten Abschnitt (28) eine Sollbruchstelle aufweist.

10. Vorrichtung nach Anspruch 9, **dadurch gekennzeichnet, dass** der erste Abschnitt (26) des Positionierstifts (24) ein Außengewinde und die Aufnahme der Herstellungsform (10) ein Innengewinde aufweist, so dass der erste Abschnitt (26) des Positionierstifts (24) in das Innengewinde der Aufnahme der Herstellungsform (10) einschraubbar ist.

11. Vorrichtung nach Anspruch 9 oder 10, **dadurch gekennzeichnet, dass** die Aufnahme in der Herstellungsform (10) von einer in die Herstellungsform (10) integrierten Hülse (18) gebildet ist.

12. Vorrichtung nach einem der Ansprüche 9 bis 11, **dadurch gekennzeichnet, dass** die Aufnahme in der Herstellungsform (10) eine zylindrische Öffnung aufweist, die an einem von der Innenseite (16) der Herstellungsform (10) abgewandten Ende geschlossen ist.

## Claims

1. A method for producing a wind energy facility component (12) from a fibre composite material, the method comprising the following steps:
• providing a production mould (10),
• providing a positioning pin (24),
• arranging a prefabricated element (34) in the production mould (10), the prefabricated element (34) having a predefined geometry and being arranged in a predefined position relative to the production mould (10),
• inserting a first portion (26) of the positioning pin (24) into a receiving portion of the production mould (10),
• inserting a second portion (28) of the positioning pin (24) into a receiving portion of the prefabricated element (34),
• arranging reinforcing fibres (32, 38) in the production mould (10),
• arranging a liquid plastics material in the production mould (10),
• curing the liquid plastics material, the prefabricated element (34) and the reinforcing fibres (32, 38) becoming interconnected,
• removing the wind energy facility component (12) from the mould, **characterized in that**, when the wind energy facility component (12) is removed from the mould, the first portion (26) of the positioning pin (24) is separated from the second portion (28) of the positioning pin (24).

2. The method according to claim 1, **characterized in that** the prefabricated element (34) is arranged at a distance from the production mould (10) that is spanned by the positioning pin (24).

3. The method according to claim 1 or 2, **characterized in that** some of the reinforcing fibres (32) between the production mould (10) and the prefabricated element (34) are guided around the positioning pin (24) without severing the reinforcing fibres (32) in the region of the positioning pin (24).

4. The method according to any one of claims 1 to 3, **characterized in that** the first portion (26) of the positioning pin (24) is screwed into an internal thread of the receiving portion of the production mould (10) and/or the second portion (28) of the positioning pin (24) is screwed into an internal thread of the receiving portion of the prefabricated element (34).

5. The method according to any one of claims 1 to 4, **characterized in that** the receiving portion in the prefabricated element (34) is formed of a sleeve (18) connected to the prefabricated element (34).

6. The method according to any one of claims 1 to 5, **characterized in that** the receiving portion in the prefabricated element (34) comprises a through-hole (36).

7. The method according to any one of claims 1 to 6, **characterized in that** the wind energy facility component (12) is a wind energy facility rotor blade or a part thereof or a housing of a nacelle of a wind energy facility or a part thereof.

8. The method according to any one of claims 1 to 7, **characterized in that** the prefabricated element (34) is a fastening anchor for fastening an attachment part or is a support, a coaming or a core for a wind energy facility component (12) produced in a sandwich-like manner.

9. A device for producing a wind energy facility component (12) from a fibre composite material, the device comprising the following:
• a production mould (10) comprising an inner face (16) that faces the wind energy facility component (12) to be produced and
• a positioning pin (24) that comprises a first portion (26) and a second portion (28), wherein
• the production mould (10) comprises a receiving portion into which the first portion (26) of the positioning pin (24) can be inserted, such that the second portion (28) projects from the inner face (16) of the production mould (10) and can be used to arrange a prefabricated element (34), which has a predefined geometry, in the production mould (10), **characterized in that**
• the positioning pin (24) has a predetermined breaking point between the first portion (26) and the second portion (28).

10. The device according to claim 9, **characterized in that** the first portion (26) of the positioning pin (24) comprises an external thread and the receiving portion of the production mould (10) comprises an internal thread, such that the first portion (26) of the positioning pin (24) can be screwed into the internal thread of the receiving portion of the production mould (10).

11. The device according to claim 9 or 10, **characterized in that** the receiving portion in the production mould (10) is formed of a sleeve (18) integrated in the production mould (10).

12. The device according to any one of claims 9 to 11, **characterized in that** the receiving portion in the production mould (10) comprises a cylindrical opening that is closed at an end that is remote from the inner face (16) of the production mould (10).

## Revendications

1. Procédé de fabrication d'un composant d'éolienne (12) en matériau composite renforcé par des fibres, le procédé présentant les étapes suivantes :
• mise à disposition d'un moule de fabrication (10),
• mise à disposition d'une tige de positionnement (24),
• placement d'un élément de construction préfabriqué (34) dans le moule de fabrication (10), l'élément de construction préfabriqué (34) présentant une géométrie prédéfinie et étant placé dans une position prédéfinie par rapport au moule de fabrication (10),
• insertion d'une première partie (26) de la tige de positionnement (24) dans un logement du moule de fabrication (10),
• insertion d'une seconde partie (28) de la tige de positionnement (24) dans un logement de l'élément de construction préfabriqué (34),
• placement de fibres de renforcement (32, 38) dans le moule de fabrication (10),
• placement d'une matière plastique liquide dans le moule de fabrication (10),
• durcissement de la matière plastique liquide, l'élément de construction préfabriqué (34) et les fibres de renforcement (32, 38) étant reliés les uns aux autres,
• démoulage du composant d'éolienne (12), **caractérisé en ce que**, lors du démoulage du composant d'éolienne (12), la première partie (26) de la tige de positionnement (24) est séparée de la seconde partie (28) de la tige de positionnement (24).

2. Procédé selon la revendication 1, **caractérisé en ce que** l'élément de construction préfabriqué (34) est disposé à une distance du moule de fabrication (10) qui est franchie par la tige de positionnement (24).

3. Procédé selon la revendication 1 ou 2, **caractérisé en ce qu'**une partie des fibres de renforcement (32) entre le moule de fabrication (10) et l'élément de construction préfabriqué (34) est guidée autour de la tige de positionnement (24), sans couper les fibres de renforcement (32) dans la zone de la tige de positionnement (24).

4. Procédé selon l'une des revendications 1 à 3, **caractérisé en ce que** la première partie (26) de la tige de positionnement (24) est vissée dans un filetage intérieur du logement du moule de fabrication (10) et/ou la seconde partie (28) de la tige de positionnement (24) est vissée dans un filetage intérieur du logement de l'élément de construction préfabriqué (34).

5. Procédé selon l'une des revendications 1 à 4, **caractérisé en ce que** le logement dans l'élément de construction préfabriqué (34) est formé par une douille (18) reliée à l'élément de construction préfabriqué (34).

6. Procédé selon l'une des revendications 1 à 5, **caractérisé en ce que** le logement dans l'élément de construction préfabriqué (34) présente une ouverture de passage (36).

7. Procédé selon l'une des revendications 1 à 6, **caractérisé en ce que** le composant d'éolienne (12) est une pale de rotor d'éolienne ou une partie de celle-ci ou une enveloppe d'une nacelle d'une éolienne ou une partie de celle-ci.

8. Procédé selon l'une des revendications 1 à 7, **caractérisé en ce que** l'élément de construction préfabriqué (34) est une ancre de fixation pour la fixation d'une pièce rapportée, un support, une hiloire ou une âme pour un composant d'éolienne (12) fabriqué dans une construction en sandwich.

9. Dispositif de fabrication d'un composant d'éolienne (12) en matériau composite renforcé par des fibres, le dispositif présentant :
• un moule de fabrication (10) comprenant un côté intérieur (16), qui est orienté vers le composant d'éolienne (12) à fabriquer, et
• une tige de positionnement (24), qui présente une première partie (26) et une seconde partie (28),
• le moule de fabrication (10) présentant un logement, dans lequel la première partie (26) de la tige de positionnement (24) peut être insérée, de telle sorte que la seconde partie (28) dépasse du côté intérieur (16) du moule de fabrication (10) et qui peut être utilisé pour le placement d'un élément de construction préfabriqué (34), qui présente une géométrie prédéfinie, dans le moule de fabrication (10), **caractérisé en ce que**
• la tige de positionnement (24) présente un point destiné à la rupture entre la première partie (26) et la seconde partie (28).

10. Dispositif selon la revendication 9, **caractérisé en ce que** la première partie (26) de la tige de positionnement (24) présente un filetage extérieur et le logement du moule de fabrication (10) un filetage intérieur, de telle sorte que la première partie (26) de la tige de positionnement (24) peut être vissée dans le filetage intérieur du logement du moule de fabrication (10).

11. Dispositif selon la revendication 9 ou 10, **caractérisé en ce que** le logement dans le moule de fabrication (10) est formé par une douille (18) intégrée dans le moule de fabrication (10).

12. Dispositif selon l'une des revendications 9 à 11, **caractérisé en ce que** le logement dans le moule de fabrication (10) présente une ouverture cylindrique, qui est fermée à une extrémité orientée à l'opposé du côté intérieur (16) du moule de fabrication (10).
